(19) Europäisches Patentamt / European Patent Office / Office européen des brevets

(11) **EP 2 487 204 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(51) Int Cl.:
***C08L 33/02*** *(2006.01)* ***C08L 71/00*** *(2006.01)*
***C08K 5/05*** *(2006.01)* ***C08K 3/10*** *(2006.01)*

(21) Anmeldenummer: **12155052.9**

(22) Anmeldetag: **13.02.2012**

(54) **Wässriges Bindemittel für körnige und/oder faserförmige Substrate**

Aqueous adhesive for fibrous and/or granular substrates

Liant aqueux pour substrats granuleux et/ou fibreux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2011 EP 11154347**

(43) Veröffentlichungstag der Anmeldung:
**15.08.2012 Patentblatt 2012/33**

(73) Patentinhaber: **BASF SE**
**67056 Ludwigshafen (DE)**

(72) Erfinder:
- **Michl, Kathrin**
  **67063 Ludwigshafen (DE)**
- **Braun, Markus**
  **69118 Heidelberg (DE)**
- **Kalbe, Michael**
  **69469 Weinheim (DE)**

(56) Entgegenhaltungen:
**EP-A1- 0 990 728** **EP-A2- 0 826 710**
**US-A- 5 318 990** **US-A- 5 977 232**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein wässriges Bindemittel für körnige und/oder faserförmige Substrate, enthaltend als wirksame Bestandteile

a) mindestens ein durch radikalische Polymerisation erhältliches Polymerisat, welches ≥ 5 Gew.-% und ≤ 100 Gew.-% wenigstens einer α,β-monoethylenisch ungesättigten Mono- oder Dicarbonsäure in einpolymerisierter Form enthält [Polymerisat A],

b) mindestens eine Polyolverbindung mit wenigstens zwei Hydroxylgruppen [Polyol B], und

c) mindestens eine Salzverbindung, welche ausgewählt ist aus der Gruppe umfassend Natriumchlorid, Kaliumchlorid, Natriumsulfat und/oder Kaliumsulfat [Salz C].

Gegenstand der vorliegenden Erfindung ist ebenfalls die Verwendung des wässrigen Bindemittels zur Herstellung von Formkörpern, ein Verfahren zur Herstellung von Formkörpern unter Verwendung von faserförmigen und/oder körnigen Substraten und wässrigem Bindemittel sowie die Formkörper selbst.

Die Verfestigung von faserförmigen oder körnigen Substraten, insbesondere in flächenförmigen Gebilden, wie beispielsweise Faservliesen, Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β -Hydroxyalkylamide als Vernetzer enthalten. Nachteilig ist die relativ aufwendige Herstellung der β -Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein reaktives Polyol eingesetzt wird. Als hochreaktive Polyole werden β -Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β -Hydroxyalkylamide mit Carboxylgruppen enthaltenden Monomeren.

Gemäß der WO 99/09100 sind thermisch härtbare Zusammensetzungen und deren Verwendung als formaldehydfreie Bindemittel zur Herstellung von Formkörpern offenbart, welche neben einem Alkanolamin mit wenigstens

zwei OH-Gruppen, ein Polymerisat 1, welches < 5 Gew.-% und ein weiteres Polymerisat 2, welches ≥ 15 Gew.-% einer α,β-ethylenisch ungesättigten Mono- oder Dicarbonsäure in einpolymerisierter Form enthält.

Des Weiteren offenbart die WO10/34645 wässrige Bindemittelsysteme für körnige und/oder faserförmige Substrate, welche als wirksame Bestandteile ein Polymerisat 1, enthaltend ≥ 5,5 Gew.-% und ≤ 20 Gew.-% einer α,β-ethylenisch ungesättigten Mono- oder Dicarbonsäure in einpolymerisierter Form, ein Polymerisat 2, enthaltend ≥ 40 Gew.-% einer α,β-ethylenisch ungesättigten Mono- oder Dicarbonsäure in einpolymerisierter Form und eine Polyolverbindung mit wenigstens zwei Hydroxylgruppen.

Allerdings vermögen die mit diesen Zusammensetzungen hergestellten Formkörper, insbesondere Faservliese, nicht in allen Eigenschaften, insbesondere der Reißkraft, bzw. hinsichtlich der zur Erzielung der spezifischen Eigenschaften erforderlichen Bindemittelmenge voll zu befriedigen.

Aufgabe der vorliegenden Erfindung war es, ein alternatives formaldehydfreies Bindemittelsystem für faserförmige und/oder körnige Substrate zur Verfügung zu stellen, durch welches insbesondere bei Faservliesen verbesserte mechanische Eigenschaften resultieren bzw. wobei die zur Erzielung der spezifischen Eigenschaften erforderliche Mengen an organischen Bindemittelkomponenten reduziert werden kann.

Demgemäß wurde das eingangs definierte wässrige Bindemittel gefunden.

Polymerisat A enthält ≥ 5 Gew.-% und ≤ 100 Gew.-%, bevorzugt ≥ 60 Gew.-% und ≤ 100 Gew.-% und insbesondere bevorzugt ≥ 90 Gew.-% und ≤ 100 Gew.-% wenigstens einer α ,β-monoethylenisch ungesättigten Mono- oder Dicarbonsäure [Monomere A] und dementsprechend ≥ 0 Gew.-% und ≤ 95 Gew.-%, bevorzugt ≥ 0 Gew.-% und ≤ 40 Gew.-% und insbesondere bevorzugt ≥ 0 Gew.-% und ≤ 10 Gew.-% wenigstens eines weiteren, sich von den α ,β-monoethylenisch ungesättigten Mono- oder Dicarbonsäuren unterscheidenden Monomers [Monomere B] in einpolymerisierter Form. Dabei addieren sich die Monomeren A und die Monomeren B zu 100 Gew.-%. Mit besonderem Vorteil ist das Polymerisat A jedoch ausschließlich aus Monomeren A aufgebaut.

Bei den Monomeren A handelt es sich um α,β-monoethylenisch ungesättigte, insbesondere $C_3$- bis $C_6$-, bevorzugt $C_3$- oder $C_4$-Mono- oder Dicarbonsäuren sowie deren voll- oder teilneutralisierten wasserlöslichen Salze, insbesondere deren Alkalimetall- oder Ammoniumsalze, wie beispielsweise Acrylsäure, Methacrylsäure, Ethylacrylsäure, Itakonsäure, Allylessigsäure, Crotonsäure, Vinylessigsäure, Fumarsäure, Maleinsäure, 2-Methylmaleinsäure, aber auch um Halbester von ethylenisch ungesättigten Dicarbonsäuren, wie Maleinsäuremonoalkylester von $C_1$- bis $C_8$-Alkoholen sowie die Ammonium-, Natrium- oder Kaliumsalze der vorgenannten Säuren. Die Monomeren A umfassen aber auch die Anhydride entsprechender α,β-monoethylenisch ungesättigter Dicarbonsäuren, wie beispielsweise Maleinsäureanhydrid oder 2-Methylmaleinsäureanhydrid. Bevorzugt ist Monomer A ausgewählt aus der Gruppe umfassend Acrylsäure, Methacrylsäure, Crotonsäure, Fumarsäure, Maleinsäure, Maleinsäureanhydrid, 2-Methylmaleinsäure und Itakonsäure, wobei jedoch Acrylsäure, Methacrylsäure, Maleinsäure und/oder Maleinsäureanhydrid insbesondere bevorzugt sind.

Als Monomere B kommen alle ethylenisch ungesättigten Monomere in Betracht, welche sich von den Monomeren A unterscheiden und mit diesen copolymerisierbar sind. Als Monomere B beispielhaft genannt seien vinylaromatische Verbindungen, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome, bevorzugt 2 bis 12 C-Atome aufweisenden Monocarbonsäuren, wie Vinylacetat, Vinylpropionat, Vinyl-n-butyrat, Vinyllaurat und Vinylstearat, $C_1$- bis $C_{12}$-Alkylvinylether, wie Methylvinylether, Ethylvinylether, n-Propylvinylether, n-Butylvinylether, n-Pentylvinylether, n-Hexylvinylether, Ester aus vorzugsweise 3 bis 6 C-Atome aufweisenden α ,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, - octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren in Betracht. Die vorgenannten Monomere bilden in der Regel ≥ 50 Gew.-%, bevorzugt ≥ 80 Gew.-% und insbesondere bevorzugt ≥ 90 Gew.-% der Gesamtmenge aller Monomeren B und stellen somit die Hauptmonomeren B dar. Erfindungsgemäß bevorzugt enthält das Polymerisat A als Hauptmonomer B einen Ester der Acrylsäure oder Methacrylsäure mit einem $C_1$- bis $C_{12}$-Alkohol, insbesondere n-Butylacrylat oder 2-Ethylhexylacrylat, eine vinylaromatische Verbindung, insbesondere Styrol, ein Nitril einer α,β-monoethylenisch ungesättigten Carbonsäure, insbesondere Acrylnitril und/oder einen Vinylester einer $C_2$- bis $C_{12}$-Monocarbonsäure, inbesondere Vinylacetat, in einpolymerisierter Form.

Weiterhin kommen als Monomere B im untergeordnetem Maße solche ethylenisch ungesättigten Monomere in Betracht, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Die vorgenannten Monomere B werden in der Regel in Mengen ≤ 10 Gew.-%, bevorzugt ≤ 8 Gew.-% und insbesondere ≤ 5 Gew.-%, jeweils bezogen auf die Gesamtmenge an Monomeren B, eingesetzt. Als bevorzugtes Monomer wird Acrylamid und/oder Methacrylamid in einer Menge von ≥ 0,5 und ≤ 4 Gew.-%, bezogen auf die Gesamtmenge an Monomeren B eingesetzt.

Monomere, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die DiEster zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1 ,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Die vorgenannten Monomere B werden in der Regel in Mengen ≤ 10 Gew.-%, bevorzugt ≤ 5 Gew.-% und insbesondere ≤ 2 Gew.-%, jeweils bezogen auf die Gesamtmenge an Monomeren B, eingesetzt. Als bevorzugtes Monomer wird Allylmethacrylat, Methylenbisacrylamid, Divinylbenzol und/oder 1,4-Butylenglykoldiacrylat in einer Menge von ≤ 0,1 und ≤ 2 Gew.-%, bezogen auf die Gesamtmenge an Monomeren B eingesetzt.

Insbesondere bevorzugt ist das Polymerisat A jedoch ausschließlich aus wenigstens einer α ,β-monoethylenisch ungesättigten Mono- oder Dicarbonsäure in einpolymerisierter Form aufgebaut.

Die Herstellung der Polymerisate A ist dem Fachmann geläufig und erfolgt beispielsweise durch radikalische Polymerisation der Monomere A und B nach der Methode der Substanz-, Emulsions-, Lösungs-, Fällungs- oder Suspensionspolymerisation (siehe hierzu auch die Herstellung der entsprechenden Polymerisate in der WO 99/09100, Seite 5, Zeile 12 bis Seite 13, Zeile 7). Bevorzugt werden die Polymerisate A durch radikalisch initiierte wässrige Emulsionspolymerisation bzw. durch Lösungspolymerisation hergestellt. Dabei erfolgt die Herstellung der Polymerisate A durch radikalisch initiierte wässrige Emulsionspolymerisation insbesondere dann, wenn das zur Polymerisation eingesetzte Monomerengemisch in solchen Mengen Monomere B enthält, dass sich im wässrigen Polymerisationsmedium eine separate Monomerphase ausbildet.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert werden, wobei wässrige Polymerisatdispersionen gebildet werden.

Die erfindungsgemäß eingesetzten wässrigen Polymerisatdispersionen weisen üblicherweise Polymerfeststoffgehalte an Polymerisat A von ≥ 10 und ≤ 70 Gew.-%, häufig ≥ 20 und ≤ 65 Gew.-% und oft ≥ 40 und ≤ 60 Gew.-%, jeweils bezogen auf die wässrige Polymerisatdispersion, auf. Der über quasielastische Lichtstreuung (ISO-Norm 13321) ermittelte zahlenmittlere Teilchendurchmesser der Emulsionspolymerisate A (cumulant z-average) liegt in der Regel zwischen 10 und 2000 nm, vorteilhaft zwischen 20 und 1000 nm und insbesondere vorteilhaft zwischen 50 und 700 nm bzw. 80 bis 400 nm.

Auch die radikalisch initiierte Lösungspolymerisation ist dem Fachmann geläufig und erfolgt insbesondere in Wasser oder einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988; L. Kotzeva, J. Polym. Sci. A-27, 1989 (4), Seiten 1325ff; C. Erbil et al., Polymer 41, 2000, Seiten 1391ff; C. Yang, X. Lu Yun, J. Polym. Sci. 75(2), 2000, Seiten 327ff; M. Sen et al., Polymer 40(9), 1999, Seiten 913ff; F. Wang et al., Anal. Chem. 68, 1996, Seiten 2477ff; J. Velada et al., Macromol. Chem. and Phys. 196, 1995, Seiten 3171ff; J.M. Cowie, C. Haq, Br. Polym. J. 9, 1977, Seiten 241ff; J. Velada et al., Polymer Degradation and Stability 52, 1996, Seiten 273ff; A. Horta et al., Makromol. Chem., Rapid Commun. 8, 1987, Seiten 523ff; T. Hirano et al., J. Polym. Sci. A-38, 2000, Seiten 2487ff; B.E. Tate, Adv. Polymer Sci. 5, 1967, Seiten 214ff). Erfolgt dabei die Herstellung von Polymerisat A in einem organischen Lösungsmittel, so wird in der Regel das organische Lösungsmittel nach Abschluss der Polymerisation zumindest teilweise, vorteilhaft zu ≥ 50 Gew.-% oder ≥ 90 Gew.-% und insbesondere vorteilhaft vollständig entfernt und das Polymerisat A in Wasser, vorteilhaft in entionisiertem Wasser aufgenommen. Die entsprechenden Verfahren sind dem Fachmann geläufig. So kann beispielsweise der Austausch des Lösungsmittels

gegen Wasser derart erfolgen, dass das Lösungsmittel, beispielsweise bei Normaldruck (1 atm absolut) oder im Unterdruck (< 1 atm absolut) zumindest teilweise, vorteilhaft vollständig in einer oder mehreren Stufen abdestilliert und durch Wasser ersetzt wird. Häufig kann es günstig sein, das Lösungsmittel durch Einleiten von Wasserdampf aus der Lösung zu entfernen und dabei gleichzeitig durch Wasser zu ersetzen. Dies ist insbesondere dann der Fall, wenn das organische Lösungsmittel eine gewisse Wasserdampfflüchtigkeit aufweist. Die dabei erhaltenen und im erfindungsgemäßen wässrigen Bindemittel eingesetzten wässrigen Polymerisatlösungen weisen üblicherweise Polymerfeststoffgehalte an Polymerisat A von ≥ 10 und ≤ 70 Gew.-%, häufig ≥ 20 und ≤ 65 Gew.-% und oft ≥ 40 und ≤ 60 Gew.-%, jeweils bezogen auf die wässrige Polymerisatlösung, auf.

Häufig weist das Polymerisat A im Falle der Herstellung durch radikalisch initiierte wässrige Emulsionspolymerisation eine Glasübergangstemperatur Tg im Bereich ≥ 0 und ≤ 170 °C, vorteilhaft ≥ 10 und ≤ 100 °C und insbesondere vorteilhaft ≥ 20 und ≤ 80 °C auf. Dabei ist mit der Glasübergangstemperatur Tg, der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Als Glasübergangstemperatur Tg ist im Rahmen dieser Schrift diejenige Glasübergangstemperatur gemeint, welche nach dem DSC-Verfahren (Differential Scanning Calorimetry, 20 K/min, midpoint-Messung, DIN 53765) ermittelt wurde. Handelt es sich bei den Polymeriaten A jedoch um Copolymerisate, welche aus ≥ 60 und ≤ 100 Gew.-% an Monomeren A in einpolymerisierter Form aufgebaut sind, so lässt sich häufig die Glasübergangstemperatur nicht nach dem DSC-Verfahren ermitteln, da sich die Polymerisate A vor Erreichen ihrer Glasübergangstemperatur zersetzen. In diesen Fällen lässt sich die Glasübergangstemperatur nach der sogenannten Foxgleichung ermitteln.

Durch die sogenannte Foxgleichung ist es dem Fachmann auch möglich, Polymerisate A im geeigneten Tg-Bereich zu identifizieren und diese durch geeignete Variation von Art und Menge der Monomeren A und B gezielt herzustellen.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Encyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Ist das Polymerisat A zu ≥ 90 Gew.-% und ≤ 100 Gew.-% und insbesondere zu 100 Gew.-% aus Monomeren A aufgebaut, so weist dieses erfindungsgemäß ein gewichtsmittleres Molekulargewicht im Bereich ≥ 1000 und ≤ 1000000 g/mol, vorteilhaft ≥ 2000 und ≤ 50000 g/mol und insbesondere vorteilhaft ≥ 3000 und ≤ 10000 g/mol auf. Die Bestimmung des gewichtsmittleren Molekulargewichts ist dem Fachmann geläufig und erfolgt insbesondere durch Gelpermeationchromatographie unter Verwendung von Standardpolymeren mit definiertem Molekulargewicht.

Selbstverständlich ist es auch möglich, die wässrigen Dispersionen oder Lösungen des Polymerisats A durch Trocknung, beispielsweise durch die dem Fachmann geläufigen Sprüh- oder Gefriertrockungsverfahren, in die entsprechenden Polymerisat A-Pulver zu überführen und daraus das erfindungsgemäße wässrige Bindemittel herzustellen.

Erfindungsgemäß enthält das wässrige Bindemittel neben dem Polymerisat A als wirksamen Bestandteil noch eine Polyolverbindung mit wenigstens 2 Hydroxylgruppen (Polyol B). Dabei werden vorteilhaft solche Polyole B eingesetzt, die bei den Temperaturen der Trocknung bzw. Aushärtung nicht oder lediglich gering flüchtig sind und daher einen entsprechend niedrigen Dampfdruck aufweisen.

Dabei kann das Polyol B prinzipiell eine Verbindung mit einem Molekulargewicht ≤ 1000 g/mol oder eine polymere Verbindung mit einem Molekulargewicht > 1000 g/mol sein. Als polymere Verbindungen mit wenigstens 2 Hydroxylgruppen seien beispielhaft Polyvinylalkohol, teilhydrolysiertes Polyvinylacetat, Homo- oder Copolymerisate von Hydroxyalkylacrylaten oder Hydroxyalkylmethacrylaten, wie beispielsweise Hydroxyethylacrylat bzw. -methacrylat oder Hydroxypropylacrylat bzw. -methacrylat genannt. Beispiele weiterer erfindungsgemäß einsetzbarer polymerer Polyole B finden sich u.a. in WO 97/45461, Seite 3, Zeile 3 bis Seite 14, Zeile 33.

Als Polyol B mit einem Molekulargewicht ≤ 1000 g/mol kommen alle die organischen Verbindung in Betracht, die wenigstens 2 Hydroxylgruppen und ein Molekulargewicht ≤ 1000 g/mol aufweisen. Beispielhaft genannt seien Ethylenglykol, 1,2-Propylenglykol, Glyzerin, 1,2- bzw. 1,4-Butandiol, Pentaerythrit, Trimethylolpropan, Sorbit, Saccharose, Glucose, 1,2-, 1,3- bzw. 1,4-Dihydroxybenzol, 1,2,3-Trihydroxybenzol, 1,2-, 1,3- bzw. 1,4-Dihydroxycyclohexan sowie

bevorzugt Alkanolamine, wie beispielsweise Verbindungen der allgemeinen Formel (I)

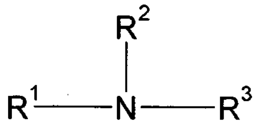

Formel (I),

Formel (I),
in der $R^1$ für ein H-Atom, eine $C_1$- bis $C_{10}$-Alkylgruppe oder eine $C_2$- bis $C_{10}$-Hydroxyalkylgruppe steht und $R^2$ und $R^3$ für eine $C_2$- bis $C_{10}$-Hydroxyalkylgruppe stehen.

Besonders bevorzugt stehen $R^2$ und $R^3$ unabhängig voneinander für eine $C_2$- bis $C_5$-Hydroxyalkylgruppe und $R^1$ für ein H-Atom, eine $C_1$- bis $C_5$-Alkylgruppe oder eine $C_2$-bis $C_5$-Hydroxyalkylgruppe.

Als Verbindungen der Formel (I) seien insbesondere Diethanolamin, Triethanolamin, Diisopropanolamin, Triisopropanolamin, Methyldiethanolamin, Butyldiethanolamin und/oder Methyldiisopropanolamin genannt.

Beispiele weiterer erfindungsgemäß einsetzbarer Polyole B mit einem Molekulargewicht ≤ 1000 g/mol finden sich ebenfalls in WO 97/45461, Seite 3, Zeile 3 bis Seite 14, Zeile 33. Beispiele weiterer Polyole C mit einem Molekulargewicht ≤ 1000 g/mol sowie ≥ 1000 g/mol finden sich auch in der WO 99/09100, Seite 13, Zeile 29 bis Seite 24, Zeile 32. Durch ihre ausdrückliche Bezugnahme sollen die genannten Polyole B als integraler Bestandteil dieser Schrift angesehen werden.

Bevorzugt wird das Polyol B ausgewählt aus der Gruppe umfassend Diethanolamin, Triethanolamin, Diisopropanolamin, Triisopropanolamin, Methyldiethanolamin, Butyldiethanolamin und/oder Methyldiisopropanolamin, wobei Triethanolamin insbesondere bevorzugt ist.

Bei den erfindungsgemäßen wässrigen Bindemitteln werden das Polymerisat A und das Polyol B bevorzugt in einem solchen Mengenverhältnis zueinander eingesetzt, dass das Gewichtsverhältnis von Polymerisat A zu Polyol B (auf Feststoffbasis) 100:1 bis 1:2, vorteilhaft 50:1 bis 1,5:1 und insbesondere vorteilhaft 10:1 1 bis 2:1 beträgt.

Insbesondere vorteilhaft werden die Mengen an Polymerisat A und Polyol B so gewählt, dass das Verhältnis der Anzahl von Äquivalenten Carboxylgruppen des Polymerisats A zu der Anzahl von Äquivalenten Hydroxylgruppen des Polyols B im Bereich 20:1 bis 1:1, bevorzugt 15:1 bis 1,5:1 und besonders bevorzugt 12:1 bis 2:1 beträgt (wobei eine Anhydridgruppe hierbei als zwei Carboxylgruppen berechnet werden).

Neben wenigstens einem Polymerisat A, wenigstens einem Polyol B enthält die erfindungsgemäße wässrige Bindemittelzusammensetzung noch wenigstens eine Salzverbindung, ausgewählt aus der Gruppe umfassend Natriumchlorid, Kaliumchloriod, Natriumsulfat und/oder Kaliumsulfat [Salz C].

$KAl(SO_4)_2$.

Im erfindungsgemäßen Bindemittel beträgt die Menge an Salz C vorteilhaft ≥ 0,1 und ≤ 40 Gew.-%, bevorzugt ≥ 1 und ≤ 20 Gew.-% und insbesondere bevorzugt ≥ 5 und ≤ 15 Gew.-%, jeweils bezogen auf die Summe der Gesamtmengen an Polymerisat A und Polyol B. Wesentlich ist jedoch, dass dann, wenn ein Salz C eingesetzt wird, welches sogenanntes Kristallwasser enthält, die Menge an Salz C abzüglich des im Salz C enthaltenen Kristallwassers ermittelt wird.

Die Herstellung des erfindungsgemäßen wässrigen Bindemittels ist unkritisch und dem Fachmann geläufig und erfolgt beispielsweise durch beliebiges Mischen der Einzelkomponenten in einem wässrigen Medium. In einer weiteren Ausführungsform kann die Herstellung des wässrigen Bindemittels auch dergestalt erfolgen, dass die Herstellung des Polymerisats A in einem wässrigen Medium erfolgt und das Polyol B und das Salz C dem wässrigen Medium dieses Polymerisats A zugemischt wird. Wesentlich in diesem Zusammenhang ist jedoch, dass das Salz C im wässrigen Medium auch "in situ" durch Neutralisation einer Säure mit einer Base (beispielsweise $H_2SO_4$ oder HCl mit NaOH oder KOH) bzw. einer Base mit einer Säure (beispielsweise NaOH, KOH oder dem Alkalimetallsalz einer Polycarbonsäure, insbesondere dem Natrium- oder Kaliumsalz eines Polymerisats A mit $H_2SO_4$ oder HCl) zu einem beliebigen Zeitpunkt gebildet werden kann.

Das erfindungsgemäße wässrige Bindemittel kann ≤ 5 Gew.-%, häufig ≤ 1,0 Gew.-%, oft ≤ 0,5 Gew.-% sowie häufig ≥ 0,1 Gew.-% und oft ≥ 0,3 Gew.-%, bezogen auf die Summe der Gesamtmengen an Polymerisat A, Polyol B und Salz C (fest/fest) eines Phosphor enthaltenden Reaktionsbeschleunigers enthalten. Phosphor enthaltende Reaktionsbeschleuniger sind beispielsweise in EP-A 583086 und EP-A 651088 offenbart. Es handelt sich dabei insbesondere um Polyphosphorsäure, Hypophosphorsäure, Phosphorsäure, Alkylphosphinsäure oder Oligomere bzw. Polymere dieser Säuren.

Die erfindungsgemäßen wässrigen Bindemittel enthalten jedoch vorzugsweise keine Phosphor enthaltenden Reaktionsbeschleuniger. Die erfindungsgemäßen Bindemittel können jedoch dem Fachmann geläufige Veresterungskatalysatoren enthalten, wie beispielsweise Schwefelsäure oder p-Toluolsulfonsäure.

Desweiteren können die erfindungsgemäßen wässrigen Bindemittel auch weitere, dem Fachmann geläufige

optionale Hilfsstoffe, wie beispielsweise so genannte Verdicker, Entschäumer, Neutralisationsmittel, Puffersubstanzen, Konservierungsmittel, feinteilige inerte Füllstoffe, wie Aluminiumsilikate, Quarz, gefällte oder pyrogene Kieselsäure, Leicht- oder Schwerspat, Talkum oder Dolomit, farbgebende Pigmente, wie Titanweiß, Zinkweiß oder Eisenoxidschwarz, Haftvermittler und/oder Flammschutzmittel enthalten.

Sollen die erfindungsgemäßen wässrigen Bindemittel als Bindemittel für Mineralfasern und/oder Glasfasern bzw. daraus hergestellte Vliese eingesetzt werden, so wird den wässrigen Bindemitteln vorteilhaft ≥ 0,001 und ≤ 5 Gew.-% und insbesondere vorteilhaft ≥ 0,05 und ≤ 2 Gew.-%, bezogen auf die Summe der Gesamtmengen an Polymerisat A, Polyol B und Salz C, wenigstens einer siliziumhaltigen organischen Verbindung (Haftvermittler), beispielsweise eines Alkoxysilans, wie Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan, 3-Mercaptopropyltrimethoxysilan und/oder Phenyltrimethoxysilan zugesetzt, wobei funktionalisierte Alkoxysilane, wie 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan und/oder 3-Mercaptopropyltrimethoxysilan besonders bevorzugt sind, zugesetzt.

Selbstverständlich können die erfindungsgemäßen wässrigen Bindemittel in Mengen < 5 Gew.-% noch wasserlösliche organische Lösungsmittel [Löslichkeit > 10 g pro 100 g entionisiertem Wasser bei 20 °C und 1 atm (absolut)], wie beispielsweise Aceton, Methanol, Ethanol und/oder Isopropanol enthalten. Mit Vorteil ist jedoch der Gehalt an organischen Lösungsmittel im wässrigen Bindemittel ≤ 1 Gew.-% und insbesondere bevorzugt ≤ 0,5 Gew.-%.

Die erfindungsgemäßen wässrigen Bindemittel weisen üblicherweise Feststoffgehalte (gebildet aus der Summe der Gesamtmenge an Polymerisat A, Polyol B und Salz C als Feststoff gerechnet) von ≥ 1 und ≤ 80 Gew.-%, vorteilhaft ≥ 20 und ≤ 70 Gew.-% und insbesondere vorteilhaft ≥ 40 und ≤ 60 Gew.-%, jeweils bezogen auf das wässrige Bindemittel auf.

Die erfindungsgemäßen wässrigen Bindemittel weisen üblicherweise pH-Werte (gemessen bei 23 °C; mit entionisiertem Wasser auf einen Feststoffgehalt von 10 Gew.-% verdünnt) im Bereich von ≥ 1 und ≤ 10, vorteilhaft ≥ 2 und ≤ 6 und insbesondere vorteilhaft ≥ 2,5 und ≤ 5 auf. Dabei können zur Einstellung des pH-Wertes alle dem Fachmann geläufigen sauren oder basischen Verbindungen eingesetzt werden. Insbesondere werden jedoch solche sauren oder basischen Verbindungen verwendet, die bei den Temperaturen während der Trocknung bzw. Aushärtung nicht flüchtig sind, wie beispielsweise Schwefelsäure oder Phosphorsäure bzw. Natriumhydroxid oder Kaliumhydroxid.

Die vorgenannten wässrigen Bindemittel eignen sich vorteilhaft zur Verwendung als Bindemittel für faserförmige und/oder körnige Substrate. Mit Vorteil lassen sich die genannten wässrigen Bindemittel daher zur Herstellung von Formkörpern aus faserförmigen und/oder körnigen Substraten einsetzen.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel, Sand sowie andere organische oder anorganische natürliche und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte mechanisch verfestigte (beispielsweise genadelte) oder chemisch, beispielsweise mit Melamin/Formaldehyd-Harzen vorgebundene Faservliese mit umfassen. Insbesondere vorteilhaft ist das erfindungsgemäße wässrige Bindemittel als formaldehydfreies Bindemittelsystem für die vorgenannten Fasern bzw. daraus gebildete Faservliese, wobei die Faservliese besonders bevorzugt sind, geeignet.

Das Verfahren zur Herstellung eines Formkörpers aus einem körnigen und/oder faserförmigen Substrat und dem vorgenannten wässrigen Bindemittel erfolgt vorteilhaft dergestalt, dass das erfindungsgemäße wässrige Bindemittel gleichmäßig auf das körnige und/oder faserförmige Substrat aufgebracht (imprägniert) wird, gegebenenfalls das mit dem wässrigen Bindemittel imprägnierte körnige und/oder faserförmige Substrat in Form gebracht wird und das imprägnierte körnige und/oder faserförmige Substrat anschließend einem thermischen Behandlungsschritt bei einer Temperatur ≥ 110 °C unterzogen wird.

Die Behandlung (Imprägnierung) des körnigen und/oder faserförmigen Substrats mit dem erfindungsgemäßen wässrigen Bindemittel erfolgt in der Regel dergestalt, dass das erfindungsgemäße wässrige Bindemittel gleichmäßig auf die Oberfläche des körnigen und/oder faserförmigen Substrats aufgebracht wird. Dabei wird die Menge an wässrigem Bindemittel so gewählt, dass pro 100 g körnigem und/oder faserförmigem Substrat ≥ 0,1 g und ≤ 100 g, bevorzugt ≥ 1 g und ≤ 50 g und insbesondere bevorzugt ≥ 5 g und ≤ 30 g Bindemittel, gebildet aus der Summe der Gesamtmengen an Polymerisat A, Polyols B und Salz C (als Feststoff gerechnet) eingesetzt werden. Die Imprägnierung des körnigen und/oder faserförmigen Substrats ist dem Fachmann geläufig und erfolgt beispielsweise durch Tränkung oder durch Besprühen des körnigen und/oder faserförmigen Substrats.

Dabei ist es erfindungsgemäß möglich, dass das Bindemittel vor dem Aufbringen auf das körnige und/oder faserförmige Substrat in einem separaten Schritt durch beliebiges Mischen Polymerisat A, Polyol B und Salz C erhalten

wird. Selbstverständlich kann das Bindemittel auch durch Mischen von Polymerisat A mit einem Gemisch aus Polyol B und Salz C in wässrigem Medium erhalten werden. Vorteilhaft wird Polymerisat A in Form einer wässrigen Polymerisatdispersion oder in Form einer wässrigen Polymerisatlösung eingesetzt. Erfolgt das Aufbringen des Bindemittels auf das körnige und/oder faserförmige Substrat beispielsweise in einer Mischtrommel oder einer Mischstrecke, so kann das Polymerisat A, das Polyol B und das Salz C, insbesondere in Form seiner wässrigen Lösung, an räumlich verschieden angeordneten Stellen in die Mischtrommel oder in die Mischstrecke, beispielsweise beim wässrigen Holzaufschluss in die sogenannte "Blowline" zwischen dem Refiner und dem Trockner eindosiert werden. Das Mischen der Komponenten A, B und C erfolgt in diesem Fall erst auf dem körnigen und/oder faserförmigen Substrat. Es ist aber auch möglich, das Polymerisat A, insbesondere in Form seiner wässrigen Dispersion oder Lösung mit dem Polyol B zu mischen und dieses Gemisch der Mischtrommel oder der Mischstrecke zuzuführen. Es ist selbstverständlich aber auch möglich, das Polymerisat A, insbesondere in Form seiner wässrigen Dispersion oder Lösung, das Polyol B und das Salz C in einer Mischkammer, Mischdüse oder einer anderen statischen oder dynamischen Mischeinrichtung erst unmittelbar vor dem Aufbringen auf das körnige und/oder faserförmige Substrat zu mischen.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 110 °C, bevorzugt ≥ 20 °C und ≤ 100 °C und insbesondere bevorzugt ≥ 40 und ≤ 100 °C und die Aushärtungsstufe bei einer Temperatur ≥ 110 °C, bevorzugt ≥ 130 und ≤ 250 °C oder ≥ 160 und ≤ 220 °C und insbesondere bevorzugt ≥ 170 °C und ≤ 210°C erfolgt.

Die Trocknungsstufe erfolgt dabei vorteilhaft dergestalt, dass bei einer Temperatur < 100 °C so lange getrocknet wird, bis das in Form gebrachte imprägnierte körnige und/oder faserförmige Substrat, welches häufig noch nicht seine endgültige Form aufweist (sogenanntes Halbzeug) eine Restfeuchte ≤ 30 Gew.-%, bevorzugt ≤ 15 Gew.-% und insbesondere bevorzugt ≤ 10 Gew.-% aufweist. Dabei wird die Restfeuchte generell bestimmt, indem ca. 1 g des erhaltenen Halbzeugs bei Raumtemperatur gewogen, dieses daran anschließend für 2 Minuten bei 110 °C getrocknet und daran anschließend abgekühlt und wieder bei Raumtemperatur gewogen wird. Dabei entspricht die Restfeuchte der Gewichtsdifferenz des Halbzeugs vor und nach dem Trocknungsvorgang bei 110 °C, bezogen auf das Gewicht des Halbzeugs vor dem Trocknungsvorgang multipliziert mit dem Faktor 100.

Das so erhaltene Halbzeug ist nach Erwärmen auf eine Temperatur von ca. 100 °C noch verformbar und kann bei dieser Temperatur in die endgültige Form des gewünschten Formkörpers gebracht werden.

Die nachfolgende Aushärtungsstufe erfolgt vorteilhaft dergestalt, dass das Halbzeug bei einer Temperatur ≥ 110 °C solange erhitzt wird, bis dieses eine Restfeuchte ≤ 2 Gew.-%, bevorzugt ≤ 1 Gew.-% oder ≤ 0,5 Gew.-% und insbesondere bevorzugt ≤ 0,1 Gew.-% aufweist, wobei das Bindemittel in Folge einer chemischen Veresterungsreaktion aushärtet.

Häufig erfolgt die Herstellung der Formkörper dadurch, dass das Halbzeug in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper, insbesondere Faservliese weisen vorteilhafte Eigenschaften, insbesondere eine verbesserte Reißfestigkeit im Vergleich zu den Formkörpern des Standes der Technik auf. Des Weiteren ist es auch möglich, durch die Verwendung des in der Regel kostengünstigen wasserlöslichen Salzes C die Mengen der teureren organischen Komponenten A und B zu reduzieren ohne dass die mechanischen Eigenschaften der Formkörper, beispielsweise deren Reißfestigkeit leiden.

Die Erfindung soll anhand nachfolgender nicht einschränkender Beispiele erläutert werden.

Beispiele:

Zur Herstellung der erfindungsgemäßen Bindemittel und des Vergleichsbindemittels wurde eine 50 gew.-%ige wässrige Lösung einer Polyacrylsäure mit einem gewichtsmittleren Molekulargewicht von 6000 g/mol eingesetzt.

Als Polyol B wurde Triethanolamin (> 99 Gew.-%) von BASF SE verwendet.

Als Salze C wurden eingesetzt:

Natriumsulfat wasserfrei (> 99 Gew.-% von Sigma-Aldrich)
Kaliumchlorid wasserfrei (> 99 Gew.-% von Merck)
Natriumchlorid wasserfrei (> 99 Gew.-% von Sigma-Aldrich)

Zur Herstellung der wässrigen Bindemittelflotten wurden bei 20 bis 25 °C (Raumtemperatur) jeweils 1000 g der vorgenannten 50 gew.-%igen wässrigen Lösung der Polyacrylsäure in einem 5 l-Becherglas vorgelegt, unter Rühren jeweils 75 g Triethanolamin zugegeben und die erhaltene wässrige Lösung durch Zugabe von 50 gew.-%igen wässrigen Schwefelsäurelösung der pH-Wert der wässrigen Lösung auf einen Wert von 2,5 eingestellt. Zu diesen Lösungen wurden die in Tabelle 1 jeweils angegebenen Salze in den jeweils angegebenen Mengen zugegeben und durch 10 minütiges Rühren homogen gemischt. Daran anschließend wurden den jeweiligen Lösungen Teilmengen entnommen, welche durch Zugabe von entionisiertem Wasser auf einen Feststoffgehalt von 4 Gew.-% eingestellt wurden. Die erhaltenen Lösungen werden als Bindemittelflotten A1 bis A7 bezeichnet. Der Vergleichsflotte V wurden keine Salze zugemischt.

Tabelle 1: Art und Menge der Alkalimetallsalze bei der Herstellung der Bindemittelflotten

| Bindemittelflotte | Alkalimetallsalz | Menge in g (Gew.-%*) |
|---|---|---|
| V | - | -(0) |
| A1 | Natriumsulfat | 28,75 (5) |
| A2 | Natriumsulfat | 57,50 (10) |
| A3 | Natriumsulfat | 86,25 (15) |
| A4 | Kaliumchlorid | 28,75 (5) |
| A5 | Kaliumchlorid | 57,50 (10) |
| A6 | Natriumchlorid | 28,75 (5) |
| A7 | Natriumchlorid | 57,50 (10) |

*) die Prozentangaben beziehen sich auf die Summe der eingesetzten Polyacrylsäure und des Triethanolamins

Zur Herstellung der Formkörper wurden Glasfaservliese (27 x 28,5 cm) der Firma Whatman GF/A No. 1820-915 mit einem Flächengewicht von 54 g/m$^2$ eingesetzt.

Zum Aufbringen der Bindemittelflotten (Imprägnierung) wurden die Glasfaservliese in Längsrichtung über ein Endlos-PES-Siebband mit einer Bandlaufgeschwindigkeit von 60 cm pro Minute durch die vorgenannten 4 gew.-%igen wässrigen Bindemittelflotten A1 bis A7 sowie V geleitet. Durch anschließende Absaugung der wässrigen Bindemittelflotten wurde der Nassauftrag auf 270 g/m$^2$ (entsprechend 10,8 g/m$^2$ Bindemittel als Feststoff gerechnet) eingestellt. Die so erhaltenen imprägnierten Glasfaservliese wurden in einem Mathis-Ofen auf einen Kunststoffnetz als Träger für 3 Minuten bei 180 °C bei maximalen Heißluftstrom getrocknet/ausgehärtet. Nach dem Abkühlen auf Raumtemperatur wurden Prüfstreifen mit einer Größe von 240 x 50 mm in Faserlängsrichtung geschnitten. Die erhaltenen Prüfstreifen wurden anschließend für 24 Stunden bei 23 °C und 50 % relativer Luftfeuchtigkeit im Klimaraum gelagert. Die in Abhängigkeit von den eingesetzten Bindemittelflotten A1 bis A7 sowie V erhaltenen Glasfaservliesprüfstreifen werden im folgenden Prüfstreifen A1 bis A7 sowie V bezeichnet.

Bestimmung Nassreißkraft

Zur Bestimmung der Nassreißkraft wurden die Prüfstreifen für 15 Minuten bei 80 °C in entionisiertem Wasser gelagert und danach überschüssiges Wasser vor der Messung mit einem Baumwollgewebe abgetupft. Die Bestimmung der Reißkraft erfolgte an einer Zugprüfmaschine der Firma Zwick-Roell, Typ Z005. Die Prüfstreifen A1 bis A7 sowie V wurden dabei so senkrecht eine Spannvorrichtung eingebracht, dass die freie Einspannlänge 200 mm betrug. Daran anschließend wurden die eingespannten Prüfstreifen mit einer Geschwindigkeit von 25 mm pro Minute in entgegen gesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 Messungen. Die in Tabelle 2 angegebenen Werte stellen jeweils den Mittelwert dieser Messungen dar.

Bestimmung der Reißkraft bei 180 °C

Die Bestimmung der Reißkraft bei 180 °C erfolgte in der Zugprüfmaschine Zwick-Roell, Typ Z 010 TH2 A. Die Prüfstreifen A1 bis A7 sowie V wurden dabei so senkrecht in eine Spannvorrichtung eingebracht, dass die freie Einspannlänge 240 mm betrug. Die Bestimmung der Reißkraft erfolgte dabei dergestalt, dass die Prüfstreifen A1 bis A7 sowie V zuerst für 60 Sekunden bei 180 °C temperiert und dann bei dieser Temperatur mit einer Geschwindigkeit von 25 mm pro Minute in entgegen gesetzter Richtung bis zum Riss der Prüfstreifen auseinander gezogen wurden. Es erfolgten jeweils 5 Messungen. Die ebenfalls in Tabelle 2 angegebenen Werte stellen jeweils den Mittelwert dieser Messungen dar.

Tabelle 2: Zusammenfassung der Reißkraftergebnisse [Wertangaben jeweils in N/50mm]

| Prüfstreifen | Nassreißkraft | Reißkraft bei 180 °C |
|---|---|---|
| V | 19 | 72 |
| A1 | 20 | 75 |
| A2 | 21 | 85 |
| A3 | 20 | 84 |
| A4 | 22 | 85 |
| A5 | 25 | 87 |
| A6 | 25 | 92 |
| A7 | 22 | 94 |

Aus den Ergebnissen ist klar ersichtlich, dass sich die salzhaltigen Bindemittelflotten A1 bis A7 vorteilhaft auf die Nassreißkraft und insbesondere vorteilhaft auf die Reißkraft bei 180 °C der mit diesen Bindemittelflotten hergestellten Faservliesen auswirken.

## Patentansprüche

1. Wässriges Bindemittel für körnige und/oder faserförmige Substrate, enthaltend als wirksame Bestandteile

   a) mindestens ein durch radikalische Polymerisation erhältliches Polymerisat, welches ≥ 5 Gew.-% und ≤ 100 Gew.-% wenigstens einer α,β-monoethylenisch ungesättigten Mono- oder Dicarbonsäure in einpolymerisierter Form enthält [Polymerisat A],
   b) mindestens eine Polyolverbindung mit wenigstens zwei Hydroxylgruppen [Polyol B], und
   c) mindestens eine Salzverbindung, welche ausgewählt ist aus der Gruppe umfassend Natriumchlorid, Kaliumchlorid, Natriumsulfat und/oder Kaliumsulfat [Salz C].

2. Wässriges Bindemittel nach Anspruch 1, wobei das Polymerisat A als Mono- oder Dicarbonsäure mindestens eine Verbindung in einpolymerisierter Form enthält, die ausgewählt ist aus der Gruppe umfassend Acrylsäure, Methacrylsäure, Crotonsäure, Fumarsäure, Maleinsäure, Maleinsäureanhydrid, 2-Methylmaleinsäure und Itakonsäure.

3. Wässriges Bindemittel nach Anspruch 1 oder 2, wobei das Polymerisat A ausschließlich aus wenigstens einer α,β-monoethylenisch ungesättigten Mono- oder Dicarbonsäure in einpolymerisierter Form aufgebaut ist.

4. Wässriges Bindemittel nach einem der Ansprüche 1 bis 3, wobei das Polyol B ein Alkanolamin ist.

5. Wässriges Bindemittel nach einem der Ansprüche 1 bis 4, wobei das Polyol B Triethanolamin ist.

6. Wässriges Bindemittel nach einem der Ansprüche 1 bis 5, wobei das Gewichtsverhältnis von Polymerisat A zu Polyol B (auf Feststoffbasis) 100:1 bis 1:2 beträgt.

7. Wässriges Bindemittel nach einem der Ansprüche 1 bis 6, wobei das Äquivalenzverhältnis der Carboxylgruppen von Polymerisat A zu den Hydroxylgruppen des Polyols B 20:1 bis 1:1 beträgt.

8. Wässriges Bindemittel nach einem der Ansprüche 1 bis 7, wobei die Menge an Salz C ≥ 0,1 und ≤ 40 Gew.-%, bezogen auf die Summe der Gesamtmengen an Polymerisat A und Polyol B beträgt.

9. Verwendung eines wässrigen Bindemittels gemäß einem der Ansprüche 1 bis 8 zur Herstellung von Formkörpern aus körnigen und/oder faserförmigen Substraten.

10. Verfahren zur Herstellung eines Formkörpers aus körnigen und/oder faserförmigen Substraten, **dadurch gekennzeichnet, dass** ein wässriges Bindemittel gemäß einem der Ansprüche 1 bis 8 auf das körnige und/oder faserförmige Substrat aufgebracht wird, gegebenenfalls das mit dem wässrigen Bindemittel behandelte kömige und/oder faserförmige Substrat in Form gebracht wird und anschließend das so behandelte körnige und/oder faserförmige Substrat einem thermischen Behandlungsschritt bei einer Temperatur ≥ 110 °C unterzogen wird.

11. Verfahren nach Anspruch 10, **dadurch gekennzeichnet, dass** pro 100 g körniges und/oder faserförmiges Substrat ≥ 1 g und ≤ 100 g Bindemittel (berechnet als Summe der Gesamtmengen von Polymerisat A, Polyol B und Salz C auf Feststoffbasis) eingesetzt werden.

12. Verfahren nach Anspruch 10 oder 11, **dadurch gekennzeichnet, dass** als körniges und/oder faserförmiges Substrat ein mechanisch verfestigtes oder chemisch vorgebundenes Faservlies eingesetzt wird.

13. Formkörper erhältlich nach einem Verfahren gemäß einem der Ansprüche 10 bis 12.

**Claims**

1. An aqueous binder for granular and/or fibrous substrates, comprising as active constituents

   a) at least one polymer obtainable by free-radical polymerization and comprising ≥ 5 wt% and ≤ 100 wt% of at least one α,β-monoethylenically unsaturated mono- or dicarboxylic acid in polymerized form [polymer A],
   b) at least one polyol compound having at least two hydroxyl groups [polyol B], and
   c) at least one salt compound which is selected from the group comprising sodium chloride, potassium chloride, sodium sulfate and/or potassium sulfate [salt C].

2. The aqueous binder according to claim 1 wherein said polymer A comprises by way of mono- or dicarboxylic acid at least one compound in polymerized form that is selected from the group comprising acrylic acid, methacrylic acid, crotonic acid, fumaric acid, maleic acid, maleic anhydride, 2-methylmaleic acid and itaconic acid.

3. The aqueous binder according to claim 1 or 2 wherein said polymer A is constructed exclusively of at least one α,β-monoethylenically unsaturated mono- or dicarboxylic acid in polymerized form.

4. The aqueous binder according to any one of claims 1 to 3 wherein said polyol B is an alkanolamine.

5. The aqueous binder according to any one of claims 1 to 4 wherein said polyol B is triethanolamine.

6. The aqueous binder according to any one of claims 1 to 5 wherein the weight ratio of polymer A to polyol B (based on solids) is in the range from 100:1 to 1:2.

7. The aqueous binder according to any one of claims 1 to 6 wherein the equivalence ratio of carboxyl groups on polymer A to hydroxyl groups on polyol B is in the range from 20:1 to 1:1.

8. The aqueous binder according to any one of claims 1 to 7 wherein the amount of salt C is ≥ 0.1 and ≤ 40 wt%, based on the summed total amounts of polymer A and polyol B.

9. The use of an aqueous binder according to any one of claims 1 to 8 for production of shaped articles from granular and/or fibrous substrates.

10. A process for producing a shaped article from granular and/or fibrous substrates, which comprises applying an aqueous binder according to any one of claims 1 to 8 to the granular and/or fibrous substrate, optionally shaping the granular and/or fibrous substrate treated with the aqueous binder, and then subjecting the granular and/or fibrous substrate thus treated to a thermal treatment step at a temperature ≥ 110°C.

11. The process according to claim 10 wherein ≥ 1 g and ≤ 100 g of binder (reckoned as summed total amounts of polymer A, polyol B and salt C, based on solids) are used per 100 g of granular and/or fibrous substrate.

12. The process according to claim 10 or 11 wherein the granular and/or fibrous substrate used is a mechanically consolidated or chemically prebonded fiber web.

13. A shaped article obtainable by a process according to any one of claims 10 to 12.

## Revendications

**1.** Liant aqueux pour substrats granulaires et/ou fibreux, contenant comme composants actifs

a) au moins un polymérisat pouvant être obtenu par polymérisation radicalaire, qui contient sous forme incorporée par polymérisation ≥ 5 % en poids et ≤ 100 % en poids d'au moins un acide mono- ou dicarboxylique à insaturation $\alpha,\beta$-monoéthylénique [polymérisat A],
b) au moins un composé polyol comportant au moins deux groupes hydroxy [polyol B], et
c) au moins un composé consistant en un sel, qui est choisi dans le groupe comprenant le chlorure de sodium, le chlorure de potassium, le sulfate de sodium et/ou le sulfate de potassium [sel C].

**2.** Liant aqueux selon la revendication 1, dans lequel le polymérisat A contient en tant qu'acide mono- ou dicarboxylique sous forme incorporée par polymérisation au moins un composé qui est choisi dans le groupe comprenant l'acide acrylique, l'acide méthacrylique, l'acide crotonique, l'acide fumarique, l'acide maléique, l'anhydride maléique, l'acide 2-méthylmaléique et l'acide itaconique.

**3.** Liant aqueux selon la revendication 1 ou 2, dans lequel le polymérisat A est exclusivement constitué d'au moins un acide mono- ou dicarboxylique à insaturation $\alpha,\beta$-monoéthylénique, sous forme incorporée par polymérisation.

**4.** Liant aqueux selon l'une quelconque des revendications 1 à 3, dans lequel le polyol B est une alcanolamine.

**5.** Liant aqueux selon l'une quelconque des revendications 1 à 4, dans lequel le polyol B est la triéthanolamine.

**6.** Liant aqueux selon l'une quelconque des revendications 1 à 5, dans lequel le rapport pondéral du polymérisat A au polyol B (sur la base de la matière solide) vaut de 100:1 à 1:2.

**7.** Liant aqueux selon l'une quelconque des revendications 1 à 6, dans lequel le rapport d'équivalence des groupes carboxy du polymérisat A aux groupes hydroxy du polyol B vaut de 20:1 à 1:1.

**8.** Liant aqueux selon l'une quelconque des revendications 1 à 7, dans lequel la quantité du sel C vaut ≥ 0,1 et ≤ 40 % en poids, par rapport à la somme des quantités totales de polymérisat A et polyol B.

**9.** Utilisation d'un liant aqueux selon l'une quelconque des revendications 1 à 8, pour la production de corps moulés à partir de substrats granulaires et/ou fibreux.

**10.** Procédé pour la production d'un corps moulé à partir de substrats granulaires et/ou fibreux, **caractérisé en ce qu'**on applique un liant aqueux selon l'une quelconque des revendications 1 à 8 sur le substrat granulaire et/ou fibreux, éventuellement on met en forme le substrat granulaire et/ou fibreux traité par le liant aqueux et ensuite on soumet à une étape de traitement thermique à une température ≥ 110 °C le substrat granulaire et/ou fibreux ainsi traité.

**11.** Procédé selon la revendication 10, **caractérisé en ce que** pour 100 g de substrat granulaire et/ou fibreux on utilise ≥ 1 g et ≤ 100 g de liant (calculé en tant que somme des quantités totales de polymérisat A, polyol B et sel C sur la base de la matière solide).

**12.** Procédé selon la revendication 10 ou 11, **caractérisé en ce que** comme substrat granulaire et/ou fibreux on utilise une nappe de fibres consolidée mécaniquement ou pré-liée chimiquement.

**13.** Corps moulé pouvant être obtenu conformément à un procédé selon l'une quelconque des revendications 10 à 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- US 5143582 A
- WO 9909100 A
- WO 1034645 A
- DE 4003422 A
- WO 9745461 A


### In der Beschreibung aufgeführte Nicht-Patentliteratur


- Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **A. ECHTE.** Handbuch der Technischen Polymerchemie. VCH, 1993
- **B. VOLLMERT.** Grundriss der Makromolekularen Chemie. E. Vollmert Verlag, 1988, vol. 1
- **L. KOTZEVA.** *J. Polym. Sci,* 1989, vol. A-27 (4), 1325ff
- **C. ERBIL et al.** *Polymer,* 2000, vol. 41, 1391ff
- **C. YANG ; X. LU YUN.** *J. Polym. Sci.,* 2000, vol. 75 (2), 327ff
- **M. SEN et al.** *Polymer,* 1999, vol. 40 (9), 913ff
- **F. WANG et al.** *Anal. Chem.,* 1996, vol. 68, 2477ff
- **J. VELADA et al.** *Macromol. Chem. and Phys.,* 1995, vol. 196, 3171ff
- **J.M. COWIE ; C. HAQ.** *Br. Polym. J.,* 1977, vol. 9, 241ff
- **J. VELADA et al.** *Polymer Degradation and Stability,* 1996, vol. 52, 273ff
- **A. HORTA et al.** *Makromol. Chem., Rapid Commun.,* 1997, vol. 8, 523ff
- **T. HIRANO et al.** *J. Polym. Sci.,* 2000, vol. A-38, 2487ff
- **B.E. TATE.** *Adv. Polymer Sci.,* 1967, vol. 5, 214ff
- **G. KANIG.** *Kolloid-Zeitschrift & Zeitschrift für Polymere,* vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19
- Ullmann's Encyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989